# EUROPÄISCHE PATENTSCHRIFT

(11) **EP 0 544 222 B1**
(45) Veröffentlichungstag und Bekanntmachung des Hinweises auf die Patenterteilung: **23.04.1997**
(21) Anmeldenummer: 92119976.6
(22) Anmeldetag: 24.11.1992
(51) Int. Cl.: H02K 5/04, H02K 5/15

(54) **Gehäuse, insbesondere für elektrische Kleinmaschinen**
Casing, in particular for small electric machine
Carcasse, en particulier pour petites machines électriques

(30) Priorität: 26.11.1991 DE 4138705
(43) Veröffentlichungstag der Anmeldung: 02.06.1993
(73) Patentinhaber: FHP Motors GmbH, 26133 Oldenburg (DE)
(72) Erfinder: Altmann, Manfred, Dipl.-Ing., W-2900 Oldenburg (DE); Tillner, Siegfried, Dipl.-Ing., W-2900 Oldenburg (DE); Oltmanns, Karl-Heinz, Dipl.-Ing., W-2900 Oldenburg (DE)
(74) Vertreter: Zangs, Rainer E., Dipl.-Ing.

(56) Entgegenhaltungen:
- DE-A- 1 613 262
- FR-A- 2 287 800
- GB-A- 1 236 328
- US-A- 3 487 457
- US-A- 3 732 616
- US-A- 4 499 391

## Beschreibung

Die Erfindung betrifft ein Gehäuse, insbesondere für elektrische Kleinmaschinen, das aus einem topfförmigen Eisenrückflußkörper, dessen Boden eine erste Lagerstelle für die Läuferwelle des Läufers bildet, und einem weiteren Lagerschild, das an der offenen Stirnseite des Eisenrückflußkörpers befestigt ist, besteht.

Es ist bekannt, Gehäuse von kleineren Elektromotoren aus handelsüblichen nahtlosen Rohren dadurch herzustellen, daß man die Bohrung auf ein genaues Maß ausdreht und dann die Ständerblechpakete einschichtet, preßt und dann mit Sprengringen oder dergleichen verspannt. Ferner wurden bereits Blechpakete mit geschweißtem Stahlmantelblech ausgeführt, wobei das vorgespannte Blechpaket in diesem Mantel eingepreßt und durch Umbördeln der Rohrenden die nötige Verspannung der Druckringe gegenüber dem Blechpaket erzielt wurde. Auch ist es bereits bekannt, einen Gehäusemantel mit dem Blechpaket dadurch zu vereinigen, daß er vermittels in Umfangsrichtung verlaufenden Sicken das Blechpaket ich Achsrichtung festlegt.

Weiterhin ist durch die DE-PS 832 635 eine elektrische Maschine mit einem glockenförmigen Gehäuse bekannt, bei der die Glockenkuppel eine Öffnung mit eingesetztem Lagerkörper hat.

Durch die DE-PS 24 32 178 wird ein gegossener Gehäusemantel offenbart, welcher am Außenumfang des Ständerblechpaketes einer elektrischen Maschine kraftschlüssig anliegt und mit einem durchgehend den Mantel trennenden axialen Innenschlitz versehen ist. Die Verspannung des Gehäusemantels um das Ständerblechpaket erfolgt dadurch, daß die Enden des Gehäusemantels angegossene radiale Rippen aufweisen, welche durch Klammern gegeneinander verspannt werden. Der Gehäusemantel weist hierbei aber keine Lagerstellen für die Läuferwelle auf.

Weiterhin ist die DE-AS 22 36 408 ein Verfahren zum Herstellen eines topfförmigen Gehäuses, insbesondere eines Gehäuses von elektrischen Kleinmotoren beschrieben, wobei ein Blechstreifen unmittelbar um einen Boden herumgebogen wird und wobei die Haltemittel fortschreitend ineinandergreifen. Auch hierbei weist das Gehäuse noch keine Lagerstellen für die Läuferwelle auf.

Die oben genannten Verfahren und Anordnungen erfordern alle noch eine Vielzahl von Bearbeitungsvorgängen und sind für billige Massenfertigung weniger geeignet.

Durch die DE-A-16 13 262 ist ein Elektromotor bekannt, dessen Gehäuse aus zwei Teilen besteht und nach dem Fließpreßverfahren aus einem Rohling geformt ist. Hierbei sind an dem Innenumfang des topfförmigen Gehäuses in zu der Achsrichtung senkrechter Ebene verlaufende Absätze eingedrückt, gegen welche einerseits das Ständerblechpaket und andererseits das zweite Gehäuseteil axial fixiert aufliegen. Der Boden des topfförmigen Gehäuseteiles weist eine topfartige Ausbuchtung auf, in der ein Kugellager eingesetzt ist, welches eine erste Lagerstelle für die Läuferwelle des Läufers bildet. Das andere, als Lagerschild ausgebildete Gehäuseteil weist in seiner Innenoberfläche eine Ausbuchtung auf, in der ein eine zweite Lagerstelle für die Läuferwelle bildendes Kugellager angeordnet ist.

Weiterhin wird durch die GB-A 12 36 328 ein Gehäuse für einen Elektromotor offenbart, bei dem das Lagerschild mittels eindrückbarer Rippen mit einem zylindrischen Gehäuseteil fest verbindbar ist.

Der Erfindung liegt die Aufgabe zugrunde, ein Gehäuse insbesondere für elektrische Kleinmotoren zu schaffen, das einfach und billiger herzustellen ist und das aber allen Anforderungen hinsichtlich der Stabilität und Zentrierung der Lagerstellen der Bauteile gerecht wird. Diese Aufgabe wird durch die im Patentanspruch 1 aufgeführten Merkmale gelöst.

Das im Fließpreßverfahren hergestellte Gehäuse zeichnet sich durch eine einfache Herstellung mit einer hohen Maßgenauigkeit aus. Hierdurch sind nachträgliche spanabhebende Bearbeitungsvorgänge nicht mehr erforderlich. Durch die Übergangsstufen an den einzelnen im Durchmesser abgesetzten Umfangsteilen werden definierte Anschlagkanten für die in das Gehäuse einzusetzenden Bauteile auf einfachste Weise geschaffen.

Weitere Merkmale der vorliegenden Erfindung gehen aus der nachstehenden Beschreibung und den Zeichnungen von zwei bevorzugten Ausführungsformen hervor.

Es zeigt:
- Figur 1: einen Schnitt durch eine elektrische Kleinmaschine einer ersten Ausführungsform,
- Figur 2: einen Schnitt durch eine elektrische Kleinmaschine einer zweiten Ausführungsform und
- Figur 3: eine Seitenansicht zu Figur 2.

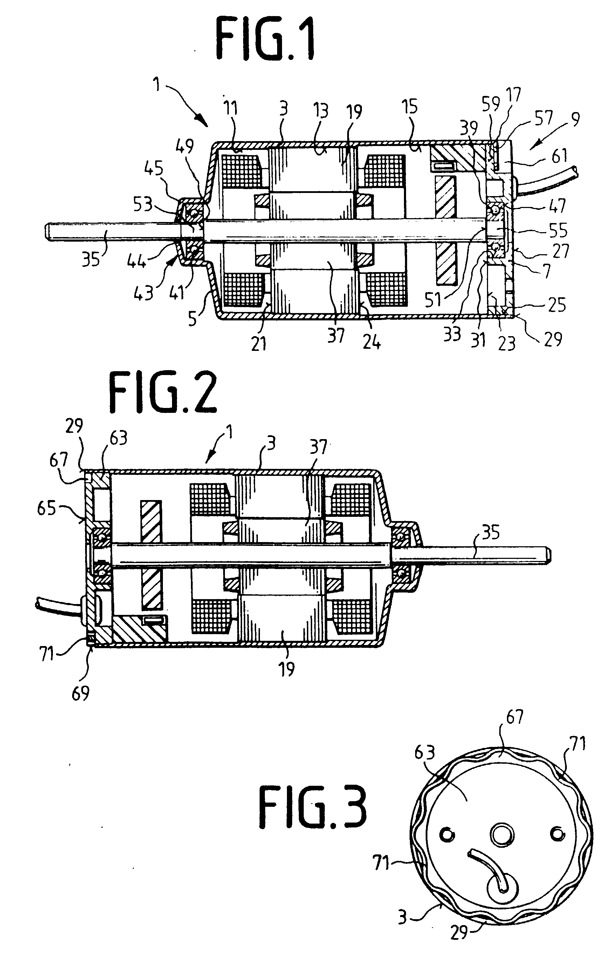

In der Figur 1 ist eine erste Ausführungsform eines Gehäuses 1, insbesondere für elektrische Kleinmaschinen dargestellt, das aus einem topfförmigen Eisenrückflußkörper 3, dessen Boden 5 das eine Lagerschild bildet, und einem weiteren Lagerschild 7, das an der offenen Stirnseite 9 des Eisenrückflußkörpers 3 befestigt ist, besteht. Dieser Eisenrückflußkörper 3 ist ein Fließpreßteil aus Aluminium mit einer glatten Außenoberfläche und im Inneren mit mehreren hintereinander angeordneten jeweils im Durchmesser von dem Boden 5 in Richtung zur offenen Stirnseite 9 erweiternd abgesetzten Umfangsabschnitten 11, 13, 15, 17. Hierbei ist in dem abgesetzten Umfangsabschnitt 13 das Statorblechpaket 19 und in dem auf der offenen Stirnseite 9 angeordneten Umfangsabschnitt 17 das Lagerschild 7 gelagert. Die Übergangsstellen weisen zwischen den einzelnen Umfangsabschnitten 11, 13, 15, 17 Stufen als Anschlagschulter 21, 23 für das Statorblechpaket und für das Lagerschild 7 auf. Um das Einsetzen des Statorblechpaketes 19 zu erleichtern, ist zwischen dem ersten abgesetzten Umfangsabschnitt 13 und dem Umfangsabschnitt 17 ein weiterer Umfangsabschnitt 15 angeordnet, der gegenüber dem Umfangsabschnitt 13 erweiternd und gegenüber dem Umfangsabschnitt 17 verengend ausgebildet ist.

Das Lagerschild 7 liegt im eingesetzten Zustand mit einer zylindrischen Lagerfläche 25 an dem Umfangsabschnitt 17 an und schließt mit einer Außenstirnfläche 27 mit dem Stirnrad 29 des Eisenrückflußkörpers 3 bündig ab. Dieses scheibenförmig ausgebildete Lagerschild 7 hat in seiner Innenoberfläche 31 eine zentrisch, als Sackloch ausgebildete Lagerbohrung 33 für ein eine Lagerstelle für die Läuferwelle 35 des Läufers 37 bildendes Kugellager 39. Eine weitere Lagerstelle für die Läuferwelle 35 ist ein in dem Boden 5 des Eisenrückflußkörpers 3 angeordnetes Kugellager 41, das in einer Vertiefung 43 des Bodens 3 lagert. Diese Vertiefung 43 weist übrigens eine zentrisch angeordnete Durchtrittsöffnung 44 für die Läuferwelle 35 auf. Die Arretierung der Kugellager 39, 41 erfolgt einerseits durch die Böden 45, 47 in der Vertiefung 43 und in der Lagerbohrung 33 und andererseits durch Anschlagstufen 49, 51, welche an den Enden der Läuferwelle 35 im Durchmesser abgesetzte Lagerflächen 53, 55 für die Kugellager 41, 39 gebildet sind.

Eine spielfreie Anlage des Lagerschildes 7 an der Anschlagschulter 23 wird dadurch erzielt, daß in dem Umfangsabschnitt 17 mehrere durch Schlitze gebildete Befestigungslappen 57 angeordnet sind, welche durch Umbiegen mit Anschlagflächen 59 in Ausnehmungen 61 des Lagerschildes 7 zur Anlage bringbar sind. Das Umbiegen der Befestigungslappen 57 und damit die Arretierung des Lagerschildes 7 kann auch automatisch erfolgen.

Im Rahmen der Erfindung kann die Befestigung des Lagerschildes 7 auch dadurch erfolgen, daß das mit dem Stirnrad 29 des Eisenrückflußkörpers 3 bündig abschließende Lagerschild 63 auf der äußeren Peripherie seiner Außenoberfläche 65 eine Auskerbung 67 aufweist, in die eine Vielzahl von in die Außenumfangsfläche 69 des dritten Umfangsabschnittes 17 einzudrückenden Befestigungsmitteln bringbar sind. Diese Befestigungsmittel können aus Rippen 71 bestehen, welche beim Eindrücken in die Auskerbung 67 von dem Außenumfang des Eisenrückflußkörpers 3 abgeschert werden. Auch diese Befestigungsmöglichkeit des Lagerschildes 7 kann automatisiert werden.

Das erfindungsgemäße Gehäuse für eine elektrische Kleinmaschine zeichnet sich durch eine einfache und billige Herstellung aus, wobei eine sichere Zentrierung der einzelnen Bauteile in dem Gehäuse auf einfachste Weise gewährleistet ist.

## Patentansprüche

1. Gehäuse, insbesondere für elektrische Kleinmaschinen, bestehend aus einem als Eisenrückflußkörper (3) ausgebildeten topfförmigen Fließpreßteil und einem Lagerschild (7, 63) mit folgenden Merkmalen:
- der Boden (5) des Fließpreßteiles weist eine Vertiefung (43) auf, in der ein Kugellager (41) angeordnet ist, welches eine erste Lagerstelle für die Läuferwelle (35) des Läufers bildet,
- der zylindrische Abschnitt des Fließpreßteiles besteht aus vier hintereinander angeordneten, jeweils im Durchmesser von dem Boden (5) in Richtung zur offenen Stirnseite (9) hin erweiternd abgesetzten Umfangsabschnitten (11, 13, 15, 17),
- die Übergangsstelle von einem dem Boden (5) nächsten, ersten Umfangsabschnitt (11) zu einem zweiten Umfangsabschnitt (13) dient als Anschlagschulter (21) für das Statorblechpaket (19),
- die Übergangsstelle zwischen einem dritten Umfangsabschnitt (15) und dem an der offenen Stirnseite (9) angeordneten vierten Umfangsabschnitt (17) dient als Anschlagschulter für das Lagerschild (7),
- der zweite Umfangsabschnitt (13) nimmt das Statorblechpaket (19) auf und der vierte Umfangsabschnitt (17) nimmt das Lagerschild (7) auf,
- das scheibenförmig ausgebildete Lagerschild (7) weist in seiner Innenoberfläche (31) eine zentrisch, als Sackloch ausgebildete Lagerbohrung (33) für ein eine zweite Lagerstelle für die Läuferwelle (35) des Läufers (37) bildendes Kugellager (39) auf.

2. Gehäuse nach Anspruch 1, **dadurch gekennzeichnet,** daß das Lagerschild (7, 63) mit seiner Außenstirnfläche (27) mit dem Stirnrand (29) des Eisenrückflußkörpers (3) bündig abschließt.

3. Gehäuse nach Anspruch 1 oder 2, **dadurch gekennzeichnet,** daß die Vertiefung (43) eine zentrisch angeordnete Durchtrittsöffnung (44) für die Läuferwelle (35) aufweist.

4. Gehäuse nach einem der vorhergehenden Ansprüche, **dadurch gekennzeichnet,** daß die Kugellager (39, 41) einerseits durch Böden (45, 47) in der Vertiefung (43) und in der Lagerbohrung (33) und andererseits durch Anschlagstufen (49, 51), welche durch an den Enden der Läuferwelle (35) im Durchmesser abgesetzte Lagerflächen (53, 55) für die Kugellager (41, 39) gebildet sind, axial fixiert sind.

5. Gehäuse nach einem der vorhergehenden Ansprüche, **dadurch gekennzeichnet,** daß das an der Anschlagschulter (23) anliegende Lagerschild (7) durch mehrere in dem Umfangsabschnitt (17) durch Schlitze ausgebildeten Befestigungslappen (57) fixierbar ist, welche durch Umbiegen mit Anschlagflächen (59) in Ausnehmungen (61) des Lagerschildes (7) zur Anlage bringbar sind.

6. Gehäuse nach einem der vorhergehenden Ansprüche, **dadurch gekennzeichnet,** daß das mit dem Stirnrand (29) des Eisenrückflußkörpers (3) bündig abschließende Lagerschild (63) auf der äußeren Peripherie seiner Außenoberfläche (65) eine Auskerbung (67) aufweist, in die eine Vielzahl von in die Außenumfangsfläche (69) des vierten Umfangsabschnittes (17) einzudrückenden Befestigungsmitteln bringbar sind.

7. Gehäuse nach Anspruch 6, **dadurch gekennzeichnet,** daß die Befestigungsmittel zur Halterung des Lagerschildes (63) aus eingedrückten Rippen (71) bestehen.

## Claims

1. Housing, especially for small electric machines, consisting of a cup-shaped extrusion part constructed as an iron reflux body (3) and of an end plate (7, 63) with the following characteristics:
- the base (5) of the extrusion part has a cavity (43) in which a ball bearing (41) is arranged which forms a first bearing location for the rotor shaft (35) of the rotor,
- the cylindrical section of the extrusion part consists of four offset circumferential sections (11, 13, 15, 17) arranged one behind the other, each expanding in diameter from the base (5) in the direction towards the open end face (9),
- the transition point from a first circumferential section (11) next to the base (5) to a second circumferential section (13) serves as a limit stop shoulder (21) for the laminated core (19) of the stator,
- the transition point between a third circumferential section (15) and the fourth circumferential section (17) arranged on the open end face (9) serves as a limit stop shoulder for the end plate (7),
- the second circumferential section (13) accommodates the laminated core (19) of the stator and the fourth circumferential section (17) accommodates the end plate (7),
- in its inner surface (31) the end plate (7) constructed in the shape of a disk has a bearing bore (33) constructed centrally as a pocket hole for a ball bearing (39) forming a second bearing location for the rotor shaft (35) of the rotor (37).

2. Housing according to Claim 1, characterised in that with its outer front surface (27) the end plate (7, 63) terminates flush with the front edge (29) of the iron reflux body (3).

3. Housing according to Claim 1 or 2, characterised in that the cavity (43) has a centrally arranged passage opening (44) for the rotor shaft (35).

4. Housing according to one of the preceding claims, characterised in that the ball bearings (39, 41) are axially fixed on the one hand by bases (45, 47) in the cavity (43) and in the bearing bore (33) and on the other hand by limit stop steps (49, 51) which are formed by bearing surfaces (53, 55) for the ball bearings (41, 39) stepped in diameter at the ends of the rotor shaft (35).

5. Housing according to one of the preceding claims, characterised in that the end plate (7) fitting against the limit stop shoulder (23) can be fixed by means of several fastening tabs (57) constructed by slots in the circumferential section (17) which by bending can be brought into contact with limit stop surfaces (59) in recesses (61) of the end plate (7).

6. Housing according to one of the preceding claims, characterised in that on the outer periphery of its outer surface (65), the end plate (63) closing flush with the front edge (29) of the iron reflux body (3), has a notch (67) into which a plurality of the fastening means to be pressed into the outer circumferential surface (69) of the fourth circumferential section (17) can be brought.

7. Housing according to Claim 6, characterised in that the fastening means for holding the end plate (63) in place consist of pressed-in ribs (71).

## Revendications

1. Carter, en particulier pour des petites machines électriques, se composant d'une pièce extrudée en forme de pot faisant office de corps de refoulement en fer (3) et d'un flasque (7, 63) présentant les caractéristiques suivantes :
- le fond (5) de la pièce extrudée présente une cavité (43) où est disposé un roulement à billes (41) qui constitue un premier palier pour l'arbre de rotor (35) du rotor,
- la section cylindrique de la pièce extrudée se compose de quatre sections périphériques (11, 13, 15, 17) disposées les unes derrière les autres, décalées dans le diamètre en s'élargissant depuis le fond (5) en direction de la face avant ouverte (9),
- la zone de transition, entre une première section périphérique (11) la plus proche du fond (5) et une seconde section périphérique (13), sert d'épaulement de butée (21) au paquet de tôles (19) du stator,
- la zone de transition, entre une troisième section périphérique (15) et une quatrième section périphérique (17) disposée contre la face avant ouverte (9), sert d'épaulement de butée au flasque (7),
- la seconde section périphérique (13) reçoit le paquet de tôle (19) du stator et la quatrième section périphérique (17) reçoit le flasque (7),
- le flasque (7), en forme de disque, présente, dans sa surface interne (31), un alésage de roulement centré (33) conçu comme un trou borgne pour un roulement à billes (39) formant un second palier pour l'arbre (35) du rotor (37).

2. Carter selon la revendication 1, caractérisé en ce que le flasque (7, 63) se trouve bord à bord, par sa surface avant externe (27), avec le bord avant (29) du corps de refluement (3) en fer.

3. Carter selon la revendication 1 ou 2, caractérisé en ce que la cavité (43) présente une ouverture de passage centrée (44) pour l'arbre de rotor (35).

4. Carter selon l'une des revendications précédentes, caractérisé en ce que les roulements à billes (39, 41) sont fixés axialement, d'une part, par des fonds (45, 47) dans la cavité (43) et dans l'alésage de roulement (33) et, d'autre part, par des étages de butée (49, 51) qui sont constitués par des surfaces d'appui (53, 55) de diamètre décalé aux extrémités de l'arbre de rotor (35) pour les roulements à billes (41, 39).

5. Carter selon l'une des revendications précédentes, caractérisé en ce que le flasque (7), appliqué contre l'épaulement de butée (23), peut être fixé par plusieurs pattes de fixation (57) qui sont constituées par des fentes dans la section périphérique (17) et qui, en se courbant, viennent s'appliquer, par des surfaces de butée (59), dans des évidements (61) du flasque (7).

6. Carter selon l'une des revendications précédentes, caractérisé en ce que le flasque (63), se trouvant bord à bord avec le bord avant (29) du corps de refluement en fer, présente, sur sa périphérie externe de sa surface externe (65), une entaille (67) dans laquelle peut être mise une pluralité de moyens de fixation à comprimer dans la surface périphérique externe (69) de la quatrième section périphérique (17).

7. Carter selon la revendication 6, caractérisé en ce que les moyens de fixation pour le maintien du flasque (63) se composent de nervures enfonçées (71).
